**Europäisches Patentamt**

**European Patent Office**

**Office européen des brevets**

(19)

(11) Veröffentlichungsnummer : **0 351 554 B1**

(12) **EUROPÄISCHE PATENTSCHRIFT**

(45) Veröffentlichungstag der Patentschrift :
**26.02.92 Patentblatt 92/09**

(21) Anmeldenummer : **89110892.0**

(22) Anmeldetag : **15.06.89**

(51) Int. Cl.⁵ : **F16J 15/36, F16J 15/34**

(54) **Gleitringdichtung.**

(30) Priorität : **16.06.88 DE 3820581**

(43) Veröffentlichungstag der Anmeldung :
**24.01.90 Patentblatt 90/04**

(45) Bekanntmachung des Hinweises auf die
Patenterteilung :
**26.02.92 Patentblatt 92/09**

(84) Benannte Vertragsstaaten :
**BE DE ES FR GB IT NL SE**

(56) Entgegenhaltungen :
**FR-A- 2 084 135**
**FR-A- 2 136 951**
**FR-A- 2 258 104**

(73) Patentinhaber : **Feodor Burgmann
Dichtungswerke GmbH & Co.
Äussere Sauerlacher Strasse 6-8
W-8190 Wolfratshausen 1 (DE)**

(72) Erfinder : **Zeus, Dieter Dr. Ing.
Irschenhauserstrasse 6
W-8021 Icking (DE)**
Erfinder : **Schmöller, Walter Dipl. Ing.
Südendstrasse 71
W-8034 Germering (DE)**
Erfinder : **Kollinger, Rudolf Dipl. Ing.
Richard-Wagner-Strasse 10
W-8034 Germering (DE)**

(74) Vertreter : **Empl, Karl et al
Patentanwälte Dipl.-Ing. K. Empl Dipl.-Ing.,
Dipl.-Wirtsch.-Ing. K. Fehners
Schumannstrasse 2
W-8000 München 80 (DE)**

**Beschreibung**

Die Erfindung betrifft eine Gleitringdichtung mit einem an der abzudichtenden Welle drehfest gehaltenen, axial verschieblich geführten und gegen die Welle bzw. eine daran feste Wellenhülse abgedichteten Gleitring und einem mittels einer Sekundärdichtung aus elastomeren Material in einer Innenschulter eines Gehäuses drehfest, axial unverschieblich und abdichtend gehaltenen Gegenring, wobei der eine dieser Ringe aus einem magnetischen (permanentmagnetischen) Werkstoff und der andere Ring aus einem magnetisierbaren (ferromagnetisch weichen) Werkstoff besteht und beide Ringe durch magnetische Kraftwirkung mit einer Vorspannkraft an ihren Gleitflächen aneinanderliegend gehalten sind.

Bei einer bekannten derartigen Gleitringdichtung ist der Gleitring in einem Trägerring angeordnet, der seinerseits über eine von einem O-Ring gebildete Sekundärdichtung gegenüber der Welle abgedichtet und in Axialrichtung verschieblich gelagert ist und der auch die Drehmomentübertragung übernimmt. Soll eine vorzeitige Zerstörung des O-Rings durch eine relative Drehbewegung zur Welle vermieden werden, muß der O-Ring mit einer großen radialen Vorspannung zwischen dem Trägerring und der Welle eingebaut werden. Hierdurch werden aber bedeutende Kräfte erforderlich, um den Trägerring und damit auch den von ihm gehaltenen Gleitring in Axialrichtung relativ zur Welle zu verschieben. Eine solche Verschiebung ist erforderlich, damit der Gleitflächenkontakt von Gleitring und Gegenring aufrechterhalten bleibt, wenn sich die Ringe im Betrieb abnützen oder Axialbewegungen der Welle auftreten. Die hohe Axialkraft zur Verschiebung des Gleitringes bedingt aber wiederum, daß eine hohe magnetische Anziehungskraft zwischen dem Gleitring und Gegenring bereitgestellt werden muß, mit der Folge, daß einerseits insbesondere der aus permanentmagnetischem Werkstoff bestehende Ring erheblichen Kostenaufwand verursacht und daß andererseits die große Axialkraft zu hohen Reibungsverlusten und damit auch Verschleiß an den Gleitflächen führt und ferner auch das vom Gleitring auf die Welle zu übertragende Drehmoment ansteigt, was wiederum eine größere radiale Verspannung des O-Ringes bedingt.

Bekannt ist es auch (siche z.B. die FR-A- 2258104), als Sekundärdichtung für den in Axialrichtung beweglichen Gleitring einen Balg einzusetzen und zur Drehmomentübertragung eine gesonderte Fuhrungseirichtung vorzusehen. Bekannt ist es ferner, den Balg neben seiner Dichtungsfunktion zur Drehmomentübertragung einzusetzen. Ein solcher balg verursacht aber nicht unerhebliche Mehrkosten, vergrößert die axiale Baulänge der Gleitringdichtung und gestattet ohne weitere Vorkehrungen keine hinreichende radiale Führung des Gleitringes.

Aufgabe der Erfindung ist es, eine Gleitringdichtung der eingangs genannten Art so weiterzubilden, daß bei kleinerer axialer Baulänge und sicherer Drehmomentübertragung zum Gleitring eine nur geringe magnetische Anziehungskraft zwischen Gleit- und Gegenring erforderlich ist und damit auch geringer Verschleiß und eine kostengünstige Herstellung erreicht wird.

Diese Aufgabe wird erfindungsgemäß dadurch gelöst, daß zur axial verschieblichen Führung, radialen Lagesicherung und Abdichtung des umlaufenden Gleitrings bezüglich der Welle und zur Drehmomentübertragung eine Winkelmanschette aus elastomeren Material vorgesehen ist, bestehend aus einer ringscheibenförmigen Membran, welche im wesentlichen in einer von der Achse der Welle lotrecht durchdrungenen Radialebene gelegen ist, sich über die radiale Dicke des Gleitrings erstreckt, radial nach innen über diesen vorsteht und an der von der Gleitfläche abgewandten axialen Stirnseite dieses Gleitringes anliegt oder dieser benachbart angeordnet ist, einem an das radial äußere Ende der Membran einstückig angeformten ersten rohrförmigen Abschnitt,welcher den äußeren Umfang des Gleitringes wenigstens auf einen Teil seiner axialen Erstreckung übergreift und an diesem abdichtend befestigt ist und einem an das radial innere Ende der Membran einstückig angeformten zweiten rohrförmigen Abschnitt, welcher ein radiales Spiel zum Gleitring aufweist und mit seinem Innenumfang an der Welle bzw. einer daran festen Wellenhülse abdichtend anliegt und daran befestigt ist.

Weitere Merkmale und Vorteile der Erfindung sind Gegenstand der Unteransprüche.

Ausführungsbeispiele der Erfindung werden nachstehend anhand der Zeichnung erläutert. In der Zeichnung zeigt:

Fig. 1 einen Längsschnitt durch eine erfindungsgemäß ausgebildete Gleitringdichtung und

Fig. 2 einen Längsschnitt durch eine Einzelheit einer abgeänderten Ausführungsform.

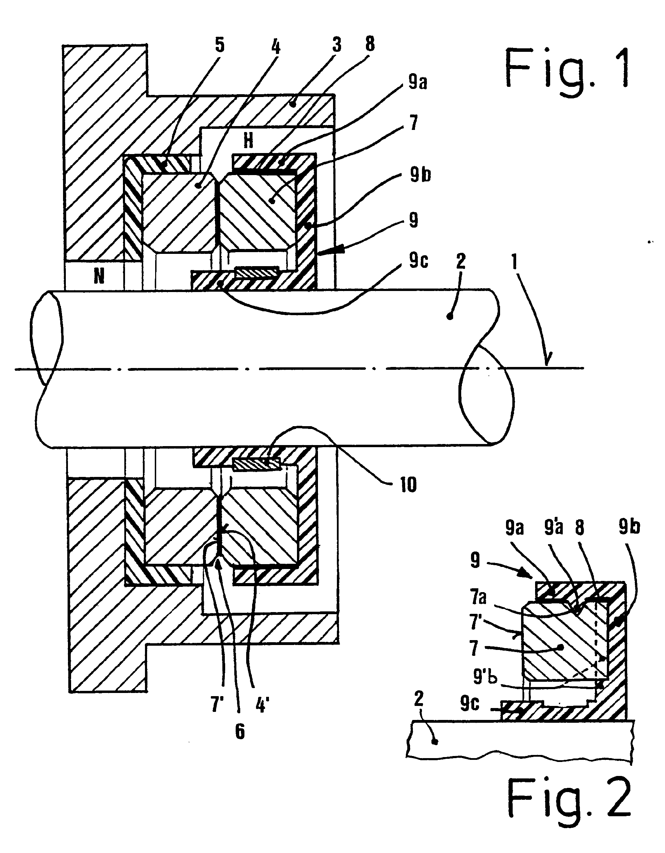

Die in Fig. 1 veranschaulichte Gleitringdichtung dient zur Abdichtung einer um eine Achse 1 umlaufenden Welle 2 gegenüber einem Gehäuse 3, wobei mit H die Hochdruckseite und mit N die Niederdruckseite bezeichnet ist. Der aus einem permanentmagnetischen Werkstoff, vorteilhaft aus einem Hartferrit bestehende Gegenring 4 ist über eine aus elastomeren Material bestehende Sekundärdichtung 5, welche im Querschnitt L-förmig ausgebildet ist und mit ihrem rohrförmigen Teil den Gegenring außen übergreift, mit radialer Vorspannung in eine Innenschulter des Gehäuses 3 eingesetzt. Der Gegenring 4 weist an seiner Gleitfläche 4' eine Beschichtung 6 mit einer Dicke von 1 bis 10 μm aus einem diamant artigen Kohlenstoff auf, welche die Verschleiß- und Korrosionsbeständigkeit erhöht. Abhängig von der Art des abzudichtenden Mediums kann sich die Beschichtung 6 auch über weitere, diesem Medium ausgesetzte Oberflächenteile oder über die gesamte Oberfläche des Gegenringes erstrecken.

An der Gleitfläche 4' liegt mit seiner Gleitfläche 7' ein mit der Welle 2 umlaufender Gleitring 7 an, welcher aus einem ferromagnetischen weichen Werkstoff, vorteilhaft aus Cr-Mo-Guß besteht. Durch die vom Gegenring 4 ausgehende magnetische Anziehungskraft werden die beiden Ringe 4, 7 auch dann mit einer vorgegebenen axialen Anpreßkraft an ihren Gleitflächen 4', 7' in Berührung gehalten, wenn die Hochdruckseite H drucklos ist und daher die hydraulisch bedingt Anpreßkraft fehlt.

Der im Querschnitt rechteckige Gleitring 7 ist an seinem Außenumfang über eine Klebeschicht 8 mit dem ihn übergreifenden ersten rohrförmigen Abschnitt 9a einer im Querschnitt U-förmigen, aus elastomeren Material ,vorteilhaft einem Butadien-Acrylnitril-Mischpolymerisat bestehenden Winkelmanschette 9 verbunden. Dieser Abschnitt 9a setzt sich einstückig in eine ringscheibenförmige Membran 9b fort, welche in einer zur Achse 1 lotrechten Ebene gelegen ist, mit einer Fläche an der von der Gleitfläche 7' abgelegenen Stirnseite des Gleitringes anliegt, ohne mit dieser verbunden zu sein und sich radial nach innen bis zur Welle 2 fortsetzt, wo sie in einen zweiten rohrförmigen Abschnitt 9c übergeht, der mit seinem Innenumfang an der Welle 2 dichtend anliegt und noch zusätzlich durch einen auf den Außenumfang aufgebrachten Sicherungsring 10 versteift und noch zusätzlich an die Welle angedrückt ist, so daß eine sichere Drehmomentübertragung erfolgt.

Gemäß der abgeänderten Ausführungsform nach Fig. 2 weist der Gleitring 7 eine umlaufende Nut 7a an seinem Außenumfang auf, während vom Innenumfang des rohrförmigen Abschnitts 9a der Winkelmanschette 9 ein komplementär geformter umlaufender Wulst 9'a vorspringt. Die der Gleitfläche 7' des Gleitrings 7 gegenüberliegende Stirnseite ist mit radial zur Achse 1 verlaufenden Aussparungen versehen, in welche sich ebenfalls in radialer Richtung erstreckende, von der Membran 9b vorstehende Vorsprünge 9'b eingreifen. Die formschlüssigen Verbindungen, gebildet durch die Nut 7a mit zugehörigem Wulst 9'a bzw. durch die Aussparung und die darin eingreifenden Vorsprünge 9'b können zusätzlich zur Klebeschicht 8 (bzw. einer anstelle dessen vorgesehenen Verbindung durch Vulkanisation) vorgesehen werden oder an deren Stelle treten.

## Patentansprüche

1. Gleitringdichtung mit einem an der abzudichtenden Welle (2) drehfest gehaltenen, axial verschieblich geführten und gegen die Welle bzw. eine daran feste Wellenhülse abgedichteten Gleitring (7) und einem mittels einer Sekundärdichtung (5) aus elastomeren Material in einer Innenschulter eines Gehäuses drehfest, axial unverschieblich und abdichtend gehaltenen Gegenring (4), wobei der eine dieser Ringe aus einem magnetischen (permanentmagnetischen) Werkstoff und der andere Ring aus einem magnetisierbaren (ferromagnetisch weichen) Werkstoff besteht und beide Ringe (4,7) durch magnetische Kraftwirkung mit einer Vorspannkraft an ihren Gleitflächen aneinanderliegend gehalten sind, **dadurch gekennzeichnet,** daß zur axial verschieblichen Führung, radialen Lagesicherung und Abdichtung des umlaufenden Gleitrings (7) bezüglich der Welle (2) und zur Drehmomentübertragung eine Winkelmanschette (9) aus elastomeren Material vorgesehen ist,

bestehend aus einer ringscheibenförmigen Membran (9b), welche im wesentlichen in einer von der Achse (1) der Welle (2) lotrecht durchdrungenen Radialebene gelegen ist, sich über die radiale Dicke des Gleitrings (7) erstreckt, radial nach innen über diesen vorsteht und an der von der Gleitfläche (7') abgewandten axialen Stirnseite dieses Gleitringes anliegt oder dieser benachbart angeordnet ist,

einem an das radial äußere Ende der Membran (9b) einstückig angeformten ersten rohrförmigen Abschnitt (9a), welcher den äußeren Umfang des Gleitringes (7) wenigstens auf einen Teil seiner axialen Erstreckung übergreift und an diesem abdichtend befestigt ist und

einem an das radial innere Ende der Membran (9b) einstückig angeformten zweiten rohrförmigen Abschnitt (9c), welcher ein radiales Spiel zum Gleitring aufweist und mit seinem Innenumfang an der Welle (2) bzw. einer daran festen Wellenhülse abdichtend anliegt und daran befestigt ist.

2. Gleitringdichtung nach Anspruch 1, **dadurch gekennzeichnet,** daß die Winkelmanschette (9) im Querschnitt U-förmig ausgebildet ist, dergestalt, daß der zweite rohrförmige Abschnitt (9c) von der Membran (9b) in Richtung zum stationären Gegenring (4) vorsteht.

3. Gleitringdichtung nach Anspruch 1 oder 2, **dadurch gekennzeicnet,** daß der zweite rohrförmige Abschnitt (9c) der Winkelmanschette (9) von einem Sicherungsring (10) umgeben und an die Welle (2) bzw. Wellenhülse angedrückt ist.

4. Gleitringdichtung nach Anspruch 1, **dadurch gekennzeichnet,** daß der erste rohrförmige Abschnitt (9a) der Winkelmanschette (9) über eine Klebeschicht (8) am äußeren Umfang des Gleitringes (7) befestigt ist.

5. Gleitringdichtung nach Anspruch 1, **dadurch gekennzeichnet,** daß der erste rohrförmige Abschnitt (9a) der Winkelmanschette (9) an den äußeren Umfang des Gleitringes (7) anvulkanisiert ist.

6. Gleitringdichtung nach Anspruch 1, 4 oder 5, **dadurch gekennzeichnet, daß** am Innenumfang des ersten rohrförmigen Abschnitts (9a) und am Außenumfang des Gleitringes (7) formschlüssig ineinander eingreifende wulstförmige Vorsprünge (9'a) und Aussparungen (7a) ausgebildet sind.

7. Gleitringdichtung nach Anspruch 1, 4, 5 oder 6, **dadurch gekennzeichnet, daß** an der von der Gleitfläche (7') des Gleitringes (7) abgewandten axialen Stirnseite und an der dieser benachbarten Fläche der Membran (9b) formschlüssig ineinander eingreifende, sich radial zur Achse (1) der Welle (2) erstreckende Vorsprünge (9'b) und Aussparungen ausgebildet sind.

8. Gleitringdichtung nach Anspruch 1, **dadurch gekennzeichnet, daß** die Winkelmanschette (9) aus einem Butadien-Acrylnitril-Mischpolymerisat besteht.

9. Gleitringdichtung nach Anspruch 1, **dadurch gekennzeichnet, daß** der magnetische (permanentmagnetische) Werkstoff ein Hartferrit ist.

10. Gleitringdichtung nach Anspruch 1, **dadurch gekennzeichnet**, daß der aus magnetischem (permanentmagnetischem) Werkstoff bestehende Ring (4) wenigstens an seiner Gleitfläche (4') eine Beschichtung (6) aus diamantartigem Kohlenstoff mit einer Dicke von 1 bis 10 μm aufweist.

11. Gleitringdichtung nach Anspruch 1, 9 oder 10, **dadurch gekennzeichnet, daß** der aus magnetischem (permanentmagnetischem) Werkstoff bestehende Ring den Gegenring (4) bildet.

12. Gleitringdichtung nach Anspruch 1, **dadurch gekennzeichnet, daß** der magnetisierbare (ferromagnetisch weiche) Werkstoff aus Cr-Mo-Guß besteht.

13. Gleitringdichtung nach Anspruch 1, **dadurch gekennzeichnet, daß** der stationäre Gegenring (4) in einer Innen schulter des Gehäuses (3) drehfest und abdichtend über einem aus elastomeren Material bestehenden Sekundärdichtring (5) gehalten ist, welcher im Querschnitt L-förmig ausgebildet ist und mit seinem rohrförmigen Teil den Gegenring an seinem äußeren Umfang übergreift.

14. Gleitringdichtung nach Anspruch 1, **dadurch gekennzeichnet, daß** die Außenumfänge des Gleitringes (7) und des Gegenringes (4) mit dem abzudichtenden, den höheren Druck (H) aufweisenden Medium beaufschlagt sind.

## Claims

1. A mechanical seal with a slide ring (7), which is held firmly, in terms of rotation, on the shaft (2) to be sealed off, is guided in axially displaceable fashion and is sealed off from the shaft or a shaft sleeve fixed on the latter, and with a counter-ring (4), which is held firmly in terms of rotation, in axially non-displaceable fashion and sealingly in an inner shoulder of a housing by means of a secondary seal (5) of elastomeric material, one of these rings being composed of a magnetic (permanent-magnetic) material and the other ring being composed of a magnetisable (ferromagnetically soft) material and both rings (4, 7) being held against one another at their sliding faces, under a prestressing force, by the effect of magnetic force, characterised in that an angular collar (9) of elastomeric material is provided for the axially displaceable guidance, radial securing of the position and sealing of the revolving slide ring (7) in relation to the shaft (2) and for the transmission of torque, the said collar comprising

an annular-disc-shaped diaphragm (9b) which is positioned essentially in a radial plane passed through perpendicularly by the axis (1) of the shaft (2), extends over the radial thickness of the slide ring (7), projects radially inwards beyond the latter and rests against or is arranged adjacent to that axial front face of this slide ring which faces away from the sliding face (7'),

a first tubular portion ( 9a ), which is formed integrally on the radially outer extremity of the diaphragm (9b), overlaps the outer circumference of the slide ring (7) at least over part of its axial extension, and is secured sealingly on the latter, and

a second tubular portion (9c), which is formed integrally on the radially inner extremity of the diaphragm (9b), has a radial clearance with respect to the slide ring, rests by its inner circumference against the shaft (2) or a shaft sleeve fixed on the said shaft, and is secured thereon.

2. A mechanical seal according claims 1, characterised in that the angular collar (9) is U-shaped in cross-section, such that the second tubular portion (9c) projects from the diaphragm (9b) towards the stationary counter-ring (4).

3. A mechanical seal according to either of claims 1 or 2, characterised in that the second tubular portion (9c) of the angular collar (9) is surrounded by a retaining ring (10) and is pressed against the shaft (2) or shaft sleeve.

4. A mechanical seal according to claim 1, characterised in that the first tubular portion (9a) of the angular collar (9) is secured via an adhesive layer (B) on the outer circumference of the slide ring (7).

5. A mechanical seal according to claim 1, characterised in that the first tubular portion (9a) of the angular collar (9) is vulcanised onto the outer circumference of the slide ring (7).

6. A mechanical seal according to any of claims 1, 4 or 5, characterised in that bead-shaped projections (9′a) and recesses (7a) which engage positively in one another are formed on the inner circumference of the first tubular portion (9a) and on the outer circumference of the slide ring (7).

7. A mechanical seal according to any of claims 1, 4, 5 or 6, characterised in that projections (9′b) and recesses engaging positively in one another and extending radially to the axis (1) of the shaft (2) are formed on that axial front face which faces away from the sliding face (7′) of the slide ring (7) and on that face of the diaphragm (9b) which is adjacent to the said front face.

8. A mechanical seal according to claim 1, characterised in that the angular collar (9) is composed of a butadiene-acrylonitrile copolymer.

9. A mechanical seal according to claim 1, characterised in that the magnetic (permanent-magnetic) material is a hard ferrite.

10. A mechanical seal according to claim 1, characterised in that, at least on its sliding face (4′), the ring (4) composed of magnetic (permanent-magnetic) material has a coating (6) of diamond-like carbon with a thickness of 1 to 10 μm.

11. A mechanical seal as claimed in any of claims 1, 9 or 10, characterised in that the ring composed of magnetic (permanent-magnetic) material forms the counterring (4).

12. A mechanical seal according to claim 1, characterised in that the magnetisable (ferromagnetically soft) material is composed of cast Cr-Mo.

13. A mechanical seal according to claim 1, characterised in that the stationary counter-ring (4) is held firmly in terms of rotation and sealingly in an inner shoulder of the housing (3) via a secondary sealing ring (5) which is composed of an elastomeric material, is of L-shaped cross-section and, with its tubular part, overlaps the counter-ring at its outer circumference.

14. A mechanical seal according to claim 1, characterised in that the outer circumferences of the slide ring (7) and the counter-ring (4) are subjected to the fluid having the higher pressure (H), which is the fluid to be sealed off.


## Revendications

1. Garniture mécanique d'étanchéité comportant un joint lisse annulaire (7) maintenu, sans le suivre dans sa rotation, sur l'arbre (2) devant être rendu étanche, mobile axialement et étanche par rapport audit arbre ou à une douille fixée de manière définitive sur celui-ci, et un contre-joint annulaire (4) maintenu, au moyen d'une garniture secondaire (5) en matériau élastomère, hors rotation, axialement immobile et étanche, dans un épaulement intérieur d'un carter, l'un de ces joints étant réalisés-en un matériau magnétique (aimant permanent) et l'autre joint étant réalisé en un matériau pouvant être aimanté (ferromagnétique mou), les deux joints (4, 7) étant serrés l'un contre l'autre sur leurs faces lisses sous une certaine force initiale qui résulte de l'effet magnétique, caractérisée par le fait -que pour le déplacement axial, la fixation radiale et l'étanchéité du joint lisse périphérique (7) par rapport à l'arbre (2) et pour la transmission des couples, il est prévu un manchon coudé (9) en matériau élastomère,
ce manchon étant constitué en une membrane (9b) en forme de disque qui est située sensiblement dans un plan radial traversé perpendiculairement par l'axe (1) de l'arbre (2) et qui s'étend sur l'épaisseur radiale du joint lisse (7), fait saillie de celui-ci radialement vers l'intérieur et s'applique sur le côté frontal de ce joint sur la face frontale axiale opposée à la face lisse (7′) ou est disposé au voisinage de cette face,
et en une première section tubulaire (9a) d'une seule pièce sur l'extrémité radialement extérieure de la membrane (9b) section (9a) qui entoure, au moins sur une partie de son extension axiale, le pourtour extérieur du joint (7) et qui est fixée de manière étanche sur celui-ci,
et en une deuxième section tubulaire (9c) moulée d'une seule pièce sur l'extrémité radialement intérieure de la membrane (9b), section (9c) qui présente un jeu radial par rapport au joint lisse et qui s'applique de manière étanche par son pourtour intérieur sur l'arbre (2), ou sur une douille fixée sur cet arbre, et qui est fixée sur ledit arbre.

2. Garniture mécanique d'étanchéité selon la revendication 1, caractérisée par le fait que le manchon coudé 9 présente une section transversale en forme de U de telle sorte que la deuxième section tubulaire (9c) fait saillie de la membrane (9b) en direction du contre-joint fixe (4).

3. Garniture mécanique d'étanchéité selon la revendication 1 ou 2, caractérisée par le fait que la deuxième section tubulaire (9c) du manchon coudé (9) est entourée d'une bague de fixation (10) et serrée sur l'arbre (2) ou sur la douille de cet arbre.

4. Garniture mécanique d'étanchéité selon la revendication 1, caractérisée par le fait que la première section tubulaire (9a) du manchon coudé (9) est fixée sur le pourtour extérieur du joint lisse (7) par une couche de colle (8).

5. Garniture mécanique d'étanchéité selon la revendication 1, caractérisée par le fait que la première section tubulaire (9a) du manchon coudé (9) est vulcanisée sur le pourtour extérieur du joint lisse (7).

6. Garniture mécanique d'étanchéité selon les revendications 1, 4 ou 5, caractérisée par le fait que sur le pourtour intérieur de la première section tubulaire (9a) et sur le pourtour extérieur du joint lisse (7) se trouvent des projections en forme de bourrelets (9'a) qui s'engagent les unes dans les autres ainsi que des évidements (7a).

7. Garniture mécanique d'étanchéité selon les revendications 1, 4, 5 ou 6 caractérisée par le fait que sur le côté frontal axial opposé à la face lisse (7') du joint lisse (7) et sur la face de la membrane (9b) adjacente à ladite face axiale, se trouvent des projections (9'b) s'engageant les unes dans les autres et s'étendant radialement à l'axe (1) de l'arbre (2) ainsi que des évidements.

8. Garniture mécanique d'étanchéité selon la revendication 1, caractérisée par le fait que le manchon coudé (9) est constitué en un polymérisat d'un mélange butadiène-acrylonitrile.

9. Garniture mécanique d'étanchéité selon la revendication 1, caractérisée par le fait que le matériau magnétique (aimant permanent) est une ferrite dure.

10. Garniture mécanique d'étanchéité selon la revendication 1, caractérisée par le fait que le joint (4) constitué en un matériau magnétique (aimant permanent) présente, au moins sur sa face lisse (4') une couche (6) en carbone de type diamant d'une épaisseur se situant entre 1 et 10 $\mu m$.

11. Garniture mécanique d'étanchéité selon les revendications 1, 9 ou 10, caractérisée par le fait que le joint constitué en un matériau magnétique (aimant permanent) constitue le contre-joint (4).

12. Garniture mécanique d'étanchéiété selon la revendication 1, caractérisée par le fait que matériau pouvant être aimanté (ferromagnétique mou) est constitué en fonte au Cr-Mo.

13. Garniture mécanique d'étanchéité selon la revendication 1, caractérisé par le fait que le contre-joint fixe (4) est maintenu dans un épaulement intérieur du carter (3) de manière fixe et étanche, au moyen d'une bague d'étanchéité secondaire (5) réalisée en un matériau élastomère, dont la section transversale est en forme de L et qui par sa partie tubulaire entoure le contre-joint sur son pourtour extérieur.

14. Garniture mécanique d'étanchéité selon la revendication 1, caractérisée par le fait que les pourtours extérieurs du joint lisse (7) et du contre-joint (4) sont exposés au fluide sous pression surélevé (H) vis-à-vis duquel l'étanchéité doit être réalisée.

# Fig. 1

# Fig. 2